(19) Europäisches Patentamt
European Patent Office
Office européen des brevets

(11) **EP 1 747 359 B1**

(12) # FASCICULE DE BREVET EUROPEEN

(45) Date de publication et mention de la délivrance du brevet:
**29.07.2009 Bulletin 2009/31**

(21) Numéro de dépôt: **04742491.6**

(22) Date de dépôt: **13.04.2004**

(51) Int Cl.:
***F01N 11/00*** *(2006.01)*

(86) Numéro de dépôt international:
**PCT/FR2004/000908**

(87) Numéro de publication internationale:
**WO 2004/092555 (28.10.2004 Gazette 2004/44)**

(54) **PROCEDE ET DISPOSITIF D'ESTIMATION DE L'ETAT THERMIQUE D'UN PIEGE CATALYTIQUE A OXYDES D'AZOTE IMPLANTE DANS LA LIGNE D'ECHAPPEMENT D'UN MOTEUR A COMBUSTION INTERNE**

VERFAHREN UND VORRICHTUNG ZUM SCHÄTZEN DES THERMISCHEN ZUSTANDS EINER IM ABGASSYSTEM EINER BRENNKRAFTMASCHINE INSTALLIERTEN KATALYTISCHEN STICKOXIDFALLE

METHOD AND DEVICE FOR ESTIMATING THE THERMAL STATE OF A CATALYTIC NITROGEN OXIDE TRAP INSTALLED IN THE EXHAUST SYSTEM OF AN INTERNAL COMBUSTION ENGINE

(84) Etats contractants désignés:
**AT BE BG CH CY CZ DE DK EE ES FI FR GB GR HU IE IT LI LU MC NL PL PT RO SE SI SK TR**

(30) Priorité: **11.04.2003 FR 0304559**

(43) Date de publication de la demande:
**31.01.2007 Bulletin 2007/05**

(73) Titulaire: **RENAULT S.A.S.**
**92100 Boulogne Billancourt (FR)**

(72) Inventeurs:
- **BARRILLON, Pascal**
  **F-92130 Issy-Les-Moulineaux (FR)**
- **TRICHARD, Jean-Michel**
  **F-78180 Montigny-le-Bretonneux (FR)**

(74) Mandataire: **Davies, Owen Robert Treharne et al**
**Renault sas**
**Technocentre TCR-GRA-2-36**
**1 avenue du Golf**
**78288 Guyancourt Cedex (FR)**

(56) Documents cités:
**DE-A- 4 319 924**
**DE-A- 10 036 942**
**DE-A- 10 055 528**
**DE-A- 10 125 759**
**US-A1- 2002 053 198**

- **"MODELING AND CONTROL OF A NOX TRAP CATALYST. 2000-01-1199" SAE TECHNICAL PAPER SERIES, SOCIETY OF AUTOMOTIVE ENGINEERS, WARRENDALE, PA, US, no. 2000-1-1199, 6 mars 2000 (2000-03-06), pages 1-12, XP002228601 ISSN: 0148-7191**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 747 359 B1

## Description

L'invention concerne l'estimation de l'état thermique d'un piège à oxydes d'azote, ou NOx, implanté dans la ligne d'échappement d'un moteur à combustion interne, et plus particulièrement la modélisation du champ thermique longitudinal d'un tel piège ou catalyseur implanté dans la ligne d'échappement d'un moteur à combustion interne fonctionnant en mélange pauvre et dont la régénération est effectuée périodiquement.

Les moteurs à combustion interne produisent des gaz d'échappement qui contiennent des substances polluantes réglementées, telles que les oxydes d'azote NOx, les hydrocarbures imbrûlés HC, le monoxyde de carbone CO et les particules qu'il est nécessaire de traiter.

Les seuils admis pour les émissions de gaz polluants des véhicules automobiles sont régulièrement revus à la baisse dans le cadre de l'évolution de réglementation sur la dépollution.

Pour répondre aux émissions des hydrocarbures imbrûlés, du monoxyde de carbone, des oxydes d'azote et des particules, on place dans la ligne d'échappement des systèmes de traitement continus, tels que des catalyseurs d'oxydation pour traiter les hydrocarbures imbrûlés et le monoxyde de carbone, ou périodiques, tels que les filtres à particules ou les pièges catalytiques à oxydes d'azote.

Ces systèmes périodiques alternent les phases de stockage des polluants et des phases de régénération des pièges, c'est-à-dire de conversion des polluants stockés en substances non polluantes.

Le piège catalytique à oxydes d'azote, ou plus simplement catalyseur, est un monolithe percé de canaux ouverts à leurs deux extrémités afin de permettre le passage des gaz d'échappement.

Ce support est aussi désigné par le terme « substrat » dans la suite du texte. Les canaux sont couverts par une structure poreuse appelée « washcoat » qui présente une grande surface de contact avec les gaz. Sur ce washcoat, sont disposés des métaux précieux (ex. : platine, rhodium) et des métaux alcalins (ex. : césium) ou alcalino-terreux (ex. : baryum) qui présentent des propriétés catalytiques d'adsorption.

L'invention vise à résoudre le problème de l'estimation et du contrôle de la thermique au sein du catalyseur. En effet, il a été observé que ces paramètres influaient directement sur les efficacités de stockage et de régénération du piège, sur les quantités associées d'oxydes d'azote stockés ou réduits, et sur le vieillissement thermique du substrat, du washcoat et de la phase catalytique.

L'utilisation de sondes de température au sein du piège à oxydes d'azote est relativement compliquée et financièrement rédhibitoire pour des véhicules produits en grandes séries. En effet, au coût unitaire de chaque sonde se rajoute un coût dû à l'augmentation du nombre d'entrées sur le calculateur de contrôle moteur, et un coût pour les étages matériels et logiciels associés.

De plus, à l'heure actuelle, on ne dispose pas de procédé fiable (ou peu onéreux) permettant de connaître les efficacités de stockage et de réduction du piège et les quantités d'oxydes d'azote stockés ou réduits associés. La connaissance de la thermique au sein du piège catalytique peut permettre de les estimer.

Par ailleurs, la température des gaz en amont du piège n'est pas représentative de l'état thermique du substrat, car en particulier l'inertie thermique du piège et l'exothermicité des relations thermiques ont une influence non négligeable.

DE 100 36 942 A1 décrit une modélisation de la distribution axiale de la température de sortie d'un catalyseur comportant des tranches. On détermine la température de chaque tranche en fonction de la température des gaz d'échappement de la tranche précédente.

L'invention a également pour but d'utiliser un estimateur par modèle physique embarqué dans le calculateur de la thermique du piège à oxydes d'azote afin d'estimer le vieillissement thermique du substrat, du washcoat et de la phase catalytique.

L'invention a également pour but de connaître la ou les températures les plus pertinentes pour l'estimation des efficacités de stockage et de réduction des quantités d'oxydes d'azote associées, et pour la protection du piège et l'estimation de son vieillissement thermique, car la forte capacité calorifique du substrat induit de forts gradients thermiques au sein du piège.

Ainsi, le modèle thermique selon l'invention permet de connaître le champ thermique longitudinal du support ou substrat de la phase catalytiques du piège à oxydes d'azote. C'est un modèle physique unidimensionnel pour lequel on discrétise la géométrie du piège suivant sa longueur en un faible nombre de réacteurs parfaitement agités successifs.

Dans sa forme la plus simple, le modèle donne pour chaque réacteur la température du substrat à partir de la connaissance de la température et du débit des gaz en amont du piège.

Par ailleurs, il simule les échanges de chaleur par convection, prenant ainsi en compte son inertie thermique.

De plus, les échanges de chaleur par convection avec l'air ambiant autour du piége sont pris en compte à partir de la connaissance de la vitesse du véhicule et de la température de l'air extérieur ou de l'air sous le capot moteur.

Dans une forme particulièrement élaborée, l'invention peut également prendre en compte l'exothermicité due aux réactions de conversion des gaz sur la phase catalytique à partir de la connaissance des débits des substances gazeuses en cause.

Quelle que soit la variante utilisée, le modèle selon l'invention est un modèle en cascade où chaque réacteur

utilise en entrée la température calculée dans le réacteur précédent.

Differents aspects et modes de mise en oeuvre et de réalisation de l'invention sont définis dans les revendications.

En d'autres termes, l'invention telle que revendiquée propose tout d'abord un procédé d'estimation par modèle physique embarqué de l'état thermique d'un piège catalytique à oxydes d'azote implanté dans la ligne d'échappement d'un moteur à combustion interne. Ce procédé comporte une modélisation du piège catalytique par une chaîne de réacteurs parfaitement agités, connectés en série. Par ailleurs, pour chaque réacteur courant de la chaîne, on calcule la température du substrat du piège catalytique ainsi que la température des gaz de la sortie de ce réacteur, à partir au moins de la température des gaz et du débit massique des gaz en amont du réacteur; on simule à l'intérieur de chaque réacteur les échanges thermiques par convection en prenant en compte l'inertie thermique du réacteur, et on prend également en compte les échanges de chaleur par convection avec l'air ambiant autour du piège catalytique à partir de la connaissance de la vitesse du véhicule incorporant le moteur et de la température de l'air extérieur ou de l'air sous le capot moteur.

Le nombre de réacteurs est de préférence inférieur à 10, par exemple supérieur ou égal à 3 et inférieur ou égal à 6.

On peut également prendre en compte l'influence de la variation de la pression des gaz au sein de la ligne d'échappement.

On peut encore prendre en compte l'exothermicité due aux réactions de conversion des gaz sur la phase catalytique, à partir de la connaissance des concentrations des substances gazeuses en cause.

Selon un mode de mise en oeuvre de l'invention, pour le réacteur courant, on calcule les enthalpies, de réaction, on estime les vitesses des réactions chimiques, on résout le système d'équations différentielles constitué des bilans matière pour les espèces gazeuses et des bilans thermiques pour les gaz et pour le substrat, de façon à obtenir la température des gaz en sortie du réacteur, cette température de sortie devenant une variable d'entrée pour le réacteur suivant de la chaîne.

L'invention a également pour objet un dispositif d'estimation par modèle physique embarqué de l'état thermique d'un piège catalytique à oxydes d'azote implanté dans la ligne d'échappement d'un moteur à combustion interne d'un véhicule, comportant une chaîne de réacteurs parfaitement agités connectés en série modélisant le piège catalytique, et, des moyens de traitement embarqués sur le véhicule et aptes pour un réacteur courant de la chaîne, à calculer la température du substrat, du piège catalytique ainsi que la température des gaz à la sortie de ce réacteur, à partir au moins de la température des gaz et du débit massique des gaz en amont du réacteur; les moyens de traitement sont aptes à simuler à l'intérieur de chaque réacteur les échanges thermiques par convection en prenant en compte l'inertie thermique du réacteur, et

les moyens de traitement sont également aptes à prendre en compte les échanges de chaleur par conviction avec l'air ambiant autour du piège catalytique à partir de la connaissance de la vitesse du véhicule incorporant le moteur et de la température de l'air extérieur ou de l'air sous le capot moteur.

Les moyens de traitement peuvent être également aptes à prendre en compte l'influence de la variation de la pression des gaz au sein de la ligne d'échappement.

Les moyens de traitement peuvent encore être aptes à prendre en compte l'exothermicité due aux réactions de la conversion des gaz sur la phase catalytique, à partir de la connaissance des concentrations des substances gazeuses en cause.

Selon un mode de réalisation de l'invention, les moyens de traitement sont aptes, pour le réacteur courant, à calculer les enthalpies de réaction, à estimer les vitesses des réactions chimiques, à résoudre le système d'équation différentielle constitué des bilans matière pour les espèces gazeuses et des bilans thermiques pour les gaz et pour le substrat, de façon à obtenir la température des gaz en sortie du réacteur, cette température de sortie devenant une variable d'entrée pour le réacteur suivant de la chaîne.

Le dispositif comporte avantageusement un calculateur embarqué incorporant les moyens de traitement.

Le dispositif peut être utilisé pour estimer l'efficacité de stockage et de régénération du piège ou pour estimer la dégradation des performances de réduction des oxydes d'azote et d'oxydation des hydrocarbures et du monoxyde de carbone (effet du vieillissement).

D'autres avantages et caractéristiques de l'invention apparaîtront à l'examen de la description détaillée de modes de réalisation et de mise en oeuvre, nullement limitatifs, et des dessins annexés, sur lesquels :

- la figure 1 illustre schématiquement un mode de réalisation d'un dispositif selon l'invention ;
- la figure 2 illustre schématiquement un mode de réalisation d'un catalyseur selon l'invention ;
- la figure 3 illustre schématiquement une discrétisation spatiale du catalyseur selon l'invention ;
- les figures 4 et 5 illustrent schématiquement une implémentation d'un modèle embarqué selon l'invention ; et
- la figure 6 est une table des variables et constantes utilisées dans une estimation par modèle selon l'invention.

Sur la figure 1, qui représente un schéma du moteur et du système de post-traitement associé, la référence VH désigne un véhicule incorporant le moteur ainsi que la ligne d'échappement LECH.

Sur cette ligne d'échappement est disposé un piège catalytique à oxydes d'azote, référencé ici NOxTRAP.

Le moteur est associé ici à un turbocompresseur TCM et l'ensemble moteur comporte par ailleurs de façon classique un échangeur de suralimentation ECSA, une vanne V1 associée à un échangeur, un capteur CPT1 pour la pression de suralimentation, des volets d'air VL. Par ailleurs, une première sonde S1 comportant un débitmètre ainsi qu'une sonde de température, est disposée en amont du compresseur, tandis qu'une deuxième sonde S2 ou estimateur de température est disposée en amont du piège NOxTRAP.

L'ensemble est piloté par un calculateur électronique MCL, recevant notamment une information RM de régime moteur, et incorporant les moyens de traitement selon l'invention.

Comme illustré sur la figure 2, le piège à oxydes d'azote NOxTRAP est un monolithe percé de canaux carrés ouverts à leurs deux extrémités afin de permettre le passage des gaz d'échappement.

Ce support est aussi désigné par le terme « substrat » dans la suite du texte. Les canaux sont couverts par une structure poreuse appelée « washcoat » qui présente une grande surface de contact avec les gaz. Sur ce washcoat, sont disposés des métaux précieux (ex. : platine, rhodium) et des métaux alcalins (ex. : césium) ou alcalino-terreux (ex. : baryum) qui présentent des propriétés catalytiques d'adsorption.

Au traitement des oxydes d'azote, vient se rajouter une fonction de post-traitement par oxydation du monoxyde de carbone CO et des hydrocarbures imbrûlés HC.

En excès d'air, les oxydes d'azote émis sont oxydés sous l'action catalytique du platine qui est l'un des métaux précieux formant la phase catalytique, puis fixés sur des sites actifs d'oxyde de baryum sous forme de nitrate de baryum.

La phase catalytique permet également d'oxyder les hydrocarbures imbrûlés et les monoxydes de carbone.

En présence de réducteurs (mélange riche), les oxydes d'azote sont libérés des sites de baryum et réduits sous l'action catalytique du rhodium qui est l'un des autres métaux précieux formant la phase catalytique.

Pour obtenir la forte concentration de réducteurs nécessaire, il faut faire fonctionner le moteur en mélange riche.

L'efficacité de stockage en oxydes d'azote du piège est fonction de plusieurs paramètres essentiels, comme la quantité de NOx stockés NS et la capacité de piégeage NSC du catalyseur.

La capacité de piégeage du catalyseur, en gramme par litre du catalyseur, représente la quantité admissible pour obtenir une efficacité de stockage cumulée prédéfinie. Cette capacité est fonction de la température du substrat mais également de la quantité d'oxydes d'azote arrivant sur le piège ainsi que du débit des gaz.

L'efficacité de stockage du piège est aussi très dépendante de l'empoisonnement des sites actifs piégeant les oxydes d'azote par le soufre contenu dans les gaz d'échappement.

En effet, les oxydes de soufre entrant en compétition avec les oxydes d'azote, viennent se fixer sur les sites actifs d'oxyde de baryum. Ces oxydes de soufre ne sont pas réduits ou désorbés lors des phases de régénération des oxydes d'azote. Pour purger le piège de ces oxydes de soufre, il faut effectuer une régénération spécifique en présence de réducteur (milieu riche) et forte thermique.

A partir de la connaissance de la quantité d'oxydes d'azote émis par le moteur et de l'efficacité de stockage du catalyseur qui est identifiée comme une relation NSC=f(T), on déduit le remplissage du piège en oxydes d'azote.

Le catalyseur NOxTRAP se caractérise aussi par sa capacité à stocker de l'oxygène. Une partie des réducteurs envoyés lors de la phase de régénération réagit avec l'oxygène piégé. Cette fraction de réducteur ne participe pas à la purge des oxydes d'azote du piège, ce qui influe directement sur l'efficacité de la régénération.

La capacité à stocker de l'oxygène est aussi fonction de la température du piège et de son vieillissement thermique.

L'efficacité de régénération en oxydes d'azote du piège est fonction de plusieurs paramètres essentiels, tels que la capacité à stocker de l'oxygène et la température du substrat.

Les réactions entrant en jeu lors des régénérations du piège sont fortement exothermiques. Elles augmentent fortement la dynamique et les niveaux thermiques du piège et doivent être contrôlées.

Il est particulièrement avantageux de connaître l'exothermicité produite par ces réactions, ce qui permet de mieux appréhender l'efficacité de traitement des oxydes d'azote ainsi que le vieillissement du piège.

En ce qui concerne le vieillissement thermique du piège, il se traduit par une diminution irréversible de la surface spécifique d'échange accessible aux gaz. Le vieillissement thermique impacte donc le matériau adsorbant et la phase active en réduction, modifiant ainsi sa capacité à stocker de l'oxygène et des NOx ainsi que sa capacité à réduire ces NOx lors des phases de purge.

L'invention vise à résoudre le problème de l'estimation et du contrôle de la thermique au sein du catalyseur, ces paramètres influant directement sur les efficacités de stockage et de régénération du piège, sur les quantités associées d'azote stockées ou réduites, et sur le vieillissement thermique du substrat et de sa phase catalytique.

De plus, la forte capacité calorifique du substrat induit de forts gradients thermiques au sein du piège, d'où la nécessité de connaître la ou les températures les plus pertinentes pour l'estimation des efficacités de stockage et de réduction, des quantités d'oxydes d'azote associées, et pour la protection du piège et l'estimation de son vieillissement

thermique.

L'invention propose donc de modéliser le catalyseur par un nombre réduit de réacteurs parfaitement agités mis en série.

Un réacteur parfaitement agité RPAi, tel que représenté sur la figure 3, se caractérise par le fait que toutes les variables mises en jeu dans ce réacteur sont uniformes (température, concentration, ...). Ainsi, la valeur prise en sortie d'un réacteur parfaitement agité RPAi par une variable, est égale à la valeur de cette variable au sein même du réacteur parfaitement agité RPAi.

A titre indicatif, pour un piège NOxTRAP, selon l'invention, dont le volume total peut être environ de 2 à 3 litres, on pourra utiliser trois à six réacteurs RPAi, ayant par exemple chacun un volume égal au volume total divisé par le nombre de réacteurs.

Ainsi, après avoir découpé le catalyseur en n éléments ou réacteur RPAi, on calcule, pour chaque élément i les enthalpies de réaction et on estime les vitesses des réactions chimiques.

On résout le système d'équation différentielle constitué des bilans massiques pour les composés gazeux et pour le substrat.

On propage ensuite de proche en proche dans le sens de l'écoulement des gaz, de sorte que le résultat obtenu à la sortie de l'élément i devient une variable d'entrée de l'élément i+1.

Sous forme de schéma-bloc, l'implémentation du modèle MM selon l'invention prend la forme illustrée schématiquement sur la figure 4.

Par ailleurs, le schéma-bloc de la figure 5 représente sous forme de module, la succession des calculs réalisée au sein de chaque réacteur.

Sur la figure 4 et la figure 5, la variable Tgs désigne la température des gaz en sortie d'un réacteur, tandis que Tg désigne la température de ces gaz à l'entrée du réacteur.

Sur ces schémas, et dans la suite du texte, la signification des variables et paramètres utilisés est fournie par la table de la figure 6.

Par ailleurs, sur les schémas des figures 4 et 5, la pression des gaz au sein du catalyseur n'apparaît pas comme une entrée. Elle pourrait néanmoins figurer comme une variable d'entrée du modèle dans le cas où l'on souhaiterait prendre en compte la contre-pression effective dans la ligne d'échappement (filtre à particules, ...).

On va maintenant décrire plus en détail les hypothèses et calculs effectués par les moyens de calcul incorporés au sein du calculateur MCL et permettant d'estimer l'état thermique du catalyseur.

Les hypothèses générales suivantes sont faites :

- les transferts de chaleur par conduction et par rayonnement sont négligés,
- la composition molaire des gaz d'échappement est la suivante :
  $[N_2]$ = 70%, $[CO_2]$ = 10%, $[H_2O]$ = 10%, somme des autres composants = 10%.
  Le corollaire de cette composition est que la masse molaire du gaz d'échappement vaut 29 g/mole.
- la pression est égale à la pression dans la ligne (pression atmosphérique ou contre-pression échappement due à un filtre à particules).
- les gaz suivent la loi des gaz parfaits.

**Calculs préliminaires et initialisations**

Ces calculs et initialisations sont effectués une seule fois par les moyens de traitement et avant l'intégration des équations différentielles. Ils peuvent être effectués à l'initialisation du calculateur.

**a) Paramètres liés au monolithe**

**Longueur du monolithe (m)**

$$L_{mono} = \frac{V_{mono}}{S_{mono}} \quad : \text{ longueur du monolithe (m)}$$

$$dL_{mono} = \frac{L_{mono}}{N_{éléments_catalyseur}}$$ : élément de longueur du monolithe (m)

**Porosité du monolithe (fraction de vide)**

$$\varepsilon_v = 1 - \frac{\rho_{mono}}{\rho_{cord}}$$

**Longueur du côté d'un canal du monolithe (m)**

$$L_{canal} = \sqrt{\frac{\varepsilon_v}{D_{canaux}}}$$

**Elément de volume du monolithe ($m^3$)**

$$dV_{mono} = \frac{V_{mono}}{N_{éléments_catalyseur}}$$

**Elément de surface du monolithe ($m^2$)**

$$dS_{mono} = 4 L_{canal} D_{canaux} dV_{mono}$$

**Elément de surface d'échange externe ($m^2$)**

$$dS_{ext} = \frac{2 L_{mono} \sqrt{S_{mono} \pi}}{N_{éléments_catalyseur}}$$

**b) Initialisations des variables**

Il faut initialiser les variables de températures à la mise sous tension du calculateur. On peut par défaut fixer cette valeur ou utiliser la valeur de la température d'eau du moteur ou de la température extérieure ou encore de la température des gaz en amont du piège afin de minimiser l'erreur d'estimation après la mise sous tension.

Après ces calculs préliminaires et l'initialisation, on effectue des calculs principaux qui sont maintenant détaillés.

Pour chaque réacteur, on effectue les bilans et calculs suivants. Les calculs constituent des étapes intermédiaires et dépendent des variables résolues avec les équations différentielles (bilans énergétiques).

__Notations :__

- La grandeur x(i,t) désigne la valeur de la grandeur x à l'instant dans le $i^{ème}$ RPA.
- Pour i=0, la température Tg(0,t) correspond à la température des gaz en amont du piège.

**(1) Bilans énergétiques**

**Equation pour la température du substrat du catalyseur**

$$(1-\varepsilon_v)\rho_{cord}cp_{cord}\frac{dT_s}{dt}dV=H_{ext}(T_{ext}-T_s)dS_{ext}+H_{cord}(T_g-T_s)dS_{mono}-EXOTHERME$$

Le terme EXOTHERME qui correspond à un terme source dû à la prise en compte de la chimie de conversion des composés gazeux, sera explicité plus bas.

**Equation pour la température des gaz**

$$\varepsilon_v\rho_g Cp_g\frac{dT_g}{dt}dV=\rho_g V_f Cp_g\frac{dT_g}{dz}dV-H_{cord}(T_g-T_s)dS_{mono}$$

**(2) Calculs des paramètres physiques des gaz**

**Masse volumique des gaz d'échappement (kg/m$^3$)**

$$\rho_g(i,t)=\frac{P_{tot}(t)M_{gaz}}{R_{gp}T_g(i,t)}$$

**Capacité calorifique du gaz d'échappement (J/K/kg) :**

CPg(i,t) peut être défini par interpolation linéaire à partir de la température et de la pression des gaz.

A la pression atmosphérique, on peut écrire la relation suivante :

$$Cp_g(i,t)=1000+1,510^{-1}(T_{g_celsius}(i,t))+2,210^{-4}(T_{g_celsius}(i,t))^2-10^{-7}(T_{g_celsius}(i,t))^3-210^{-10}(T_{g_celsius}(i,t))^4$$

**Viscosité dynamique des gaz d'échappement (kg/m/s)**

$\mu_g$(i,t) peut être défini par interpolation linéaire à partir de la température et de la pression des gaz.

A la pression atmosphérique, on peut écrire la relation suivante :

$$\mu_g(i,t)=10^{-6}\left[-0,3+0,0805437T_g(i,t)-6,9523810^{-5}\left(T_g(i,t)\right)^2+3,6111110^{-8}\left(T_g(i,t)\right)^3\right]$$

**Conductibilité thermique des gaz d'échappement (W/m/K)**

λ(i,t) peut être défini par interpolation linéaire à partir de la température et de la pression des gaz.

A la pression atmosphérique, on peut écrire la relation suivante :

$$\lambda(i,t)=2,053\ 10^{-3}(T_g(i,t))^{0,5547}-1,996\ 10^{-2}$$

**(3) Calculs des paramètres physiques du substrat**

**Capacité calorifique du substrat (cordiérite) (J/K/kg) :**

Cpcord(i,t) peut être défini par interpolation linéaire à partir de la température et de la pression des gaz. A la pression atmosphérique, on peut écrire la relation suivante :

$$Cp_{cord}(i,t)=353,8+1,952T_s(i,t)-1,51\ 10^{-3}\ T_s^2(i,t)+4,863610^{-7}\ T_s^3(i,t)$$

**(4) Calcul du coefficient d'échange convectif gaz-solide**

**Vitesse linéaire des gaz dans le catalyseur (m/s)**

$$V_f(i,t)=\frac{10^{-3}\ Q_g(t)}{\varepsilon_v S_{mono}\rho_g(i,t)}$$

**Nombre de Reynolds**

$$R_e(i,t)=\frac{\rho_g(i,t)V_f(i,t)L_{canal}}{\mu_g(i,t)}$$

**Nombre de Prandtl**

$$P_r(i,t)=\frac{\mu_g(i,t)Cp_g(i,t)}{\lambda_g(i,t)}$$

**Coefficient de transfert gaz/solide à la température $T_g$(J/K/s/m²)**

$$h_{cord}(i,t)=\frac{0,687\sqrt{\pi}\left(R_e(i,t)\right)^{0,69}\left(P_r(i,t)\right)^{1/3}\lambda_g(i,t)}{2L_{canal}}$$

Cette formule est uniquement valable pour un écoulement laminaire, ce qui est toujours le cas au sein d'un piège à NOx (section des canaux très petite).

**(5) Calcul du coefficient d'échange convectif solide-conditions extérieures**

On définit le coefficient d'échange convectif entre le catalyseur et l'air ambiant autour de celui-ci par une table d'interpolation fonction de la vitesse du véhicule.

Suivant la position du catalyseur NOxTRAP dans la ligne d'échappement, on peut annuler ou rendre constant

ce coefficient. On néglige alors l'influence de la vitesse du véhicule sur l'échange convectif vers l'extérieur et on peut alors se passer de cette vitesse comme paramètre d'entrée du modèle.

Il est également possible de prendre en compte dans le modèle les dégagements de chaleur dus aux réactions chimiques et à la conversion des constituants gazeux.

Pour prendre en compte l'exothermicité générée par les réactions de conversion (réduction/oxydation) des substances gazeuses sur la phase catalytique, on peut modéliser macroscopiquement les dégagements d'énergie à partir du calcul des vitesses de création ou de disparition des espèces chimiques, des enthalpies de ces réactions et de la connaissance, ou de l'estimation, des concentrations molaires de ces substances à l'entrée du catalyseur.

On va maintenant décrire les grandes lignes d'une solution permettant de prendre en compte cette exothermicité.

Cette solution se base sur le schéma réactionnel suivant du comportement du catalyseur NOxTRAP :

*oxydation des hydrocarbures*

$$CH_2 + 3/2\,O_2 \xrightarrow{r_1} CO_2 + H_2O \qquad (1)$$

*oxydation du CO*

$$CO + 1/2\,O_2 \xrightarrow{r_3} CO_2 \qquad (2)$$

*adsorption de l'oxygène*

$$\Sigma O + 1/2\,O_2 \xrightarrow{r_4} O^* \qquad (3)$$

*désorption de l'oxygène*

$$O^* \xrightarrow{r_5} \Sigma O + 1/2\,O_2 \qquad (4)$$

*adsorption des $NO_2$*

$$2\Sigma N + NO_2 \xrightarrow{r_6} NO_2^* \qquad (5)$$

*désorption des $NO_2$*

$$NO_2^* \xrightarrow{r_7} 2\Sigma N + NO_2 \qquad (6)$$

*réduction des $NO_2$ par l'hydrogène*

$$NO_2 + 2H_2 \xrightarrow{r_8} 1/2\,N_2 + 2H_2O \qquad (7)$$

*réduction des $NO_2$ par le CO*

$$NO_2 + 2CO \xrightarrow{r_9} 1/2\,N_2 + 2CO_2 \qquad (8)$$

*réduction des $NO_2$ par les hydrocarbures*

$$3NO_2 + 2CH_2 \xrightarrow{r_{10}} 3/2\,N_2 + 2H_2O + 2CO_2 \qquad (9)$$

*oxydation de $H_2$, équivalente à celle du CO*

$$H_2 + 1/2\,O_2 \xrightarrow{r_{13}} H_2O \qquad (10)$$

*oxydation du CO par l'oxygène de surface*

$$CO + O^* \xrightarrow{r_{14}} CO_2 + \Sigma O \qquad (11)$$

*oxydation de l'hydrogène par l'oxygène de surface*

$$H_2 + O^* \xrightarrow{r_{15}} H_2O + \Sigma O \qquad (12)$$

*oxydation des HC par l'oxygène de surface*

$$CH_2 + 3O^* \xrightarrow{r_{16}} H_2O + CO_2 + 3\Sigma O \qquad (13)$$

En utilisant ce schéma réactionnel, on a fait les hypothèses suivantes :

- le schéma réactionnel utilisé, à 13 cinétiques, est volontairement simplifié,
- les réactions interviennent suivant la phase de fonctionnement considérée du piège :

  (1), (2), (3), (4), (5), (6), (10) en phase d'adsorption ou stockage des NOx,
  (3), (4), (5), (6), (7), (8), (9), (11), (12), (13) en phase de régénération, ou purge
  (4), (6) en phases d'adsorption et de régénération.

- On considère qu'il y a 100% de $NO_2$ en amont ou au sein du catalyseur pour simplifier le schéma réactionnel.

Pour calculer les concentrations ou teneur molaire en entrée du catalyseur, on convertit, pour chaque substance, les quantités massiques estimées en sortie moteur en concentration volumique ou teneur molaire. Le débit massique intervient dans la formule de conversion pour convertir des quantités massiques. Pour passer de teneur molaire en concentration volumique, la pression et la température des gaz sont également requises. L'estimation des quantités gazeuses est une entrée du modèle de température. Ces quantités gazeuses peuvent être obtenues par exemple en utilisant des tables d'interpolation (en régime, débit).

Au sein du catalyseur, on peut résoudre les équations différentielles constituées du bilan massique pour toutes les espèces réactives au sein de chaque réacteur parfaitement agité. Cette méthode requiert néanmoins une charge importante de calcul pour le micro-contrôleur MCL.

Une autre solution consiste à établir dans une phase de calibration, une répartition des concentrations ou teneur molaire des substances polluées en entrée du piège dans les différents réacteurs. Le calcul des vitesses de création/disparition des espèces réactives s'effectue de la manière suivante : Pour chaque réaction élémentaire (i) : $xA+yB \rightarrow zC$, La vitesse de création/disparition est définie par la relation :

$$r_i = k_i \ \exp\left(\frac{-Ea_i}{RT}\right)[A]^x[B]^y$$

<u>**Hypothèses**</u> **:**

- Les réactions sont élémentaires
- Les termes [X] représentent les concentrations molaires ou pressions partielles des espèces X (espèces gazeuses ou sites actifs) suivant que l'on prenne en compte l'influence de la pression sur les vitesses de création/disparition.

Les enthalpies de réaction s'écrivent de cette façon (l'indice j correspond au numéro de la réaction) : $\Delta Hj(i,t)=f(T)$

On définit ici par EXOTHERME, le terme représentant l'apport de chaleur dû aux réactions de réduction/oxydation des espèces contenues dans les gaz sur la phase catalytique du monolithe. Il correspond à la somme des produits des vitesses de création/disparition par les enthalpies de ces réactions :

$$\text{EXOTHERME} = \left[\sum_j r_j \Delta H_j\right] dV$$

- On peut limiter le calcul de ce terme en ne prenant en compte que les réactions présentant une exothermicité prépondérante. On ne précise pas ici le choix de ces réactions.
- Le terme EXOTHERME s'annule dans le cas où l'on ne souhaite pas prendre en compte les apports de chaleur dus aux réactions chimiques.

## Revendications

**1.** Procédé d'estimation par modèle physique embarqué de l'état thermique d'un piège catalytique à oxydes d'azote implanté dans la ligne d'échappement d'un moteur à combustion interne, comportant une modélisation du piège catalytique par une chaîne de réacteurs parfaitement agités (RPAi) connectes en série, et, pour un réacteur courant de la chaîne, un calcul de la température du substrat (Ts) du piège catalytique, ainsi que de la température des gaz (Tgs) au sein et à la sortie de ce réacteur, à partir au moins de la température des gaz et du débit massique des gaz en amont du réacteur, **caractérisé par le fait qu'**on simule à l'intérieur de chaque reacteur les échanges thermiques par convection en prenant en compte l'inertie thermique du réacteur, et qu'on prend également en compte les échanges de chaleur par convection avec l'air ambiant autour du piège catalytique à partir de la connaissance de la vitesse du véhicule incorporant le moteur et de la températures de l'air extérieur ou de l'air sous le capot moteur.

**2.** Procédé selon la revendication 1, **caractérisé par le fait que** le nombre de réacteurs est inférieur à 10, par exemple supérieur ou égal à 3 et inférieur ou égal à 6.

**3.** Procédé selon l'une des revendications précédentes, **caractérisé par le fait qu'**on prend également en compte l'influence de la variation de la pression des gaz au sein de la ligne d'échappement.

**4.** Procédé selon l'une des revendications précédentes, **caractérisé par le fait qu'**on prend en compte l'exothermicité due aux réactions de conversion des composés gazeux sur la phase catalytique, à partir de la connaissance des concentrations des substances gazeuses en cause.

**5.** Procédé selon l'une des revendications précédentes, **caractérisé par le fait que** pour le réacteur courant, on calcule les enthalpies de réaction, on estime les vitesses des réactions chimiques, on résout le système d'équations différentielles constitué des bilans massiques et thermiques pour les gaz et pour le substrat, de façon à obtenir la température des gaz en sortie du réacteur, cette température de sortie devenant une variable d'entrée pour le réacteur suivant de la chaîne.

**6.** Dispositif d'estimation par modèle physique embarqué de l'état thermique d'un piège catalytique à oxydes d'azote implanté dans la ligne d'échappement d'un moteur à combustion interne d'un véhicule, comportant une chaîne de réacteurs parfaitement agités (RPAi) connectés en série modélisant le piège catalytique (NOxTRAP), et, des moyens de traitement (MCL) embarqués sur le véhicule, aptes à simuler à l'intérieur de chaque réacteur les échanges thermiques par convection en prenant en compte l'inertie thermique du réacteur, également aptes à prendre en compte les échanges de chaleur par convection avec l'air ambiant autour du piège catalytique à partir de la connaissance de la vitesse du véhicule incorporant le moteur et de la température de l'air extérieur ou de l'air sous le capot moteur, et aptes pour un réacteur courant de la chaîne, à calculer la température du substrat du piège catalytique ainsi que la température des gaz au sein et à la sortie de ce réacteur, à partir au moins de la température des gaz et du débit massique des gaz en amont du réacteur.

**7.** Dispositif selon la revendication 6, **caractérisé par le fait que** le nombre de réacteurs est inférieur à 10, par exemple supérieur ou égal à 3 et inférieur ou égal à 6.

**8.** Dispositif selon l'une des revendications 6 ou 7, **caractérisé par le fait que** les moyens de traitement sont également aptes à prendre en compte l'influence de la variation de la pression des gaz au sein de la ligne d'échappement.

**9.** Dispositif selon l'une des revendications 6 à 8, **caractérisé par le fait que** les moyens de traitement sont également aptes à prendre en compte l'exothermicité due aux réactions de conversion des composés gazeux sur la phase catalytique, à partir de la connaissance des concentrations des substances gazeuses en cause.

**10.** Dispositif selon l'une des revendications 6 à 9, **caractérisé par le fait que** les moyens de traitement sont aptes, pour le réacteur courant, à calculer les enthalpies de réaction, à estimer les vitesses des réactions chimiques, à résoudre le système d'équations différentielles constitué des bilans massiques et thermiques pour les gaz et pour le substrat, de façon à obtenir la température des gaz en sortie du réacteur, cette température de sortie devenant une variable d'entrée pour le réacteur suivant de la chaîne.

**11.** Dispositif selon l'une des revendications 6 à 10, **caractérisé par le fait qu'**il comporte un calculateur embarqué (MCL) incorporant les moyens de traitement.

**12.** Utilisation du dispositif selon l'une des revendications 6 à 11, pour estimer l'efficacité de stockage et de régénération du piège.

**13.** Utilisation du dispositif selon l'une quelconque des revendications 6 à 11, pour estimer la dégradation des performances de réduction des oxydes d'azote et d'oxydation des hydrocarbures et du monoxyde de carbone.

## Claims

**1.** Method of using an on-board physical model to estimate the thermal condition of a nitrogen oxide catalytic trap installed in the exhaust line of an internal combustion engine, involving modelling the catalytic trap as a sequence of perfectly agitated reactors (RPAi) connected in series and, for a current reactor in the sequence, calculating the

temperature of the substrate (Ts) of the catalytic trap and the temperature of the gases (Tgs) in and leaving this reactor from at least the temperature of the gases and the mass flow rate of the gases upstream of the reactor, **characterized in that** the convective heat exchanges within each reactor are simulated taking the thermal inertia of the reactor into consideration, and **in that** the convective heat exchanges with the ambient air around the catalytic trap are also taken into consideration on the basis of knowledge of the speed of the vehicle incorporating the engine and knowledge of the temperature of the external air or of the air under the bonnet.

**2.** Method according to Claim 1, **characterized in that** the number of reactors is less than 10, for example greater than or equal to 3 and less than or equal to 6.

**3.** Method according to one of the preceding claims, **characterized in that** the influence that the variation in the pressure of the gases within the exhaust line has is also taken into consideration.

**4.** Method according to one of the preceding claims, **characterized in that** the exothermicity due to the conversion reactions of the gaseous components on the catalytic phase is taken into consideration on the basis of knowledge of the concentrations of the gaseous substances involved.

**5.** Method according to one of the preceding claims, **characterized in that**, for the current reactor, the reaction enthalpies are calculated, the speeds of the chemical reactions are estimated, the system of differential equations consisting of mass balances and thermal balances for the gases and for the substrate are resolved in such a way as to obtain the temperature of the gases leaving the reactor, this exit temperature becoming an input variable for the next reactor in the sequence.

**6.** Device for using an on-board physical model to estimate the thermal condition of a nitrogen oxide catalytic trap installed in the exhaust line of an internal combustion engine of a vehicle, comprising a sequence of perfectly agitated reactors (RPAi) connected in series modelling the catalytic trap (NOxTRAP) and processing means (MCL) carried on board the vehicle and able to simulate, within each reactor, the convective heat exchanges taking the thermal inertia of the reactor into consideration and also able to take into consideration convective heat exchanges with the ambient air around the catalytic trap on the basis of knowledge of the speed of the vehicle incorporating the engine and knowledge of the temperature of the external air or of the air under the bonnet, and able, for a current reactor in the sequence, to calculate the temperature of the substrate of the catalytic trap and the temperature of the gases within and leaving this reactor, on the basis of at least the temperature of the gases and of the mass flow rate of the gases upstream of the reactor.

**7.** Device according to Claim 6, **characterized in that** the number of reactors is less than 10, for example greater than or equal to 3 and less than or equal to 6.

**8.** Device according to one of Claims 6 and 7,
**characterized in that** the processing means are also capable of taking into consideration the influence that the variation in the pressure of the gases within the exhaust line has.

**9.** Device according to one of Claims 6 to 8,
**characterized in that** the processing means are also capable of taking into consideration the exothermicity due to the conversion reactions of the gaseous components on the catalytic phase, on the basis of knowledge of the concentrations of the gaseous substances involved.

**10.** Device according to one of Claims 6 to 9,
**characterized in that** the processing means are capable, for the current reactor, of calculating the reaction enthalpies, of estimating the speeds of the chemical reactions, of resolving the system of differential equations consisting of mass balances and thermal balances for the gases and for the substrate, so as to obtain the temperature of the gases leaving the reactor, this exit temperature becoming an input variable for the next reactor in the sequence.

**11.** Device according to one of Claims 6 to 10,
**characterized in that** it comprises an on-board computer (MCL) incorporating the processing means.

**12.** Use of the device according to one of Claims 6 to 11, to estimate the storage and regeneration effectiveness of the trap.

**13.** Use of the device according to any one of Claims 6 to 11, to estimate the degradation in nitrogen oxides reduction

and hydrocarbons and carbon monoxide oxidation performance.

## Patentansprüche

1. Verfahren zum Schätzen, mittels eines eingebauten physikalischen Modells, des thermischen Zustands einer im Abgassystem einer Brennkraftmaschine installierten katalytischen Stickoxidfalle, umfassend eine Modellierung der katalytischen Falle durch eine Kette von perfekten gemischten Reaktoren (RPAi), die in Reihe geschaltet sind, und fur einen kontinuierlichen Reaktor der Kette, eine Berechnung der Temperatur des Substrats (Ts) der katalytischen Falle sowie der Temperatur der Gase (Tgs) innerhalb und am Ausgang dieses Reaktors, ausgehend von mindestens der Temperatur der Gase und des Massenstroms der Gase stromaufwärts des Reaktors, **dadurch gekennzeichnet, dass** im Innern jedes Reaktors der Warmeaustausch durch Konvektion simuliert wird, indem die thermische Trägheit des Reaktors berücksichtigt wird und indem außerdem der Warmeaustausch durch Konvektion mit der die katalytische Falle umgebenden Umgebungsluft berücksichtigt wird, ausgehend von der Kenntnis der Geschwindigkeit des Fahrzeugs, in dem der Motor enthalten ist, und der Temperatur der Außenluft oder der Luft unter der Motorhaube.

2. Verfahren nach Anspruch 1, **dadurch gekennzeichnet, dass** die Anzahl der Reaktoren kleiner ist als 10, zum Beispiel großer oder gleich 3 und kleiner oder gleich 6.

3. Verfahren nach einem der vorhergehenden Anspruche, **dadurch gekennzeichnet, dass** außerdem der Einfluss der Druckschwankungen der Gase innerhalb des Abgassystems berücksichtigt wird.

4. Verfahren nach einem der vorhergehenden Anspruche, **dadurch gekennzeichnet, dass** die Exothermizitat berücksichtigt wird, die auf die Umwandlungsreaktionen der gasförmigen Verbindungen auf die katalytische Phase zurückzuführen ist, ausgehend von der Kenntnis der Konzentrationen der betreffenden gasförmigen Substanzen.

5. Verfahren nach einem der vorhergehenden Anspruche, **dadurch gekennzeichnet, dass** fur den kontinuierlichen Reaktor die Reaktionsenthalpien berechnet werden, die Geschwindigkeiten der chemischen Reaktionen geschatzt werden, das Differentialgleichungssystem gelost wird, das aus den Massen- und Wärmebilanzen fur die Gase und fur das Substrat besteht, um die Temperatur der Gase am Ausgang des Reaktors zu erhalten, wobei diese Ausgangstemperatur zu einer Eingangsvariable fur den folgenden Reaktor der Kette wird.

6. Vorrichtung zum Schätzen, mittels eines eingebauten physikalischen Modells, des thermischen Zustands einer im Abgassystem einer Brennkraftmaschine eines Fahrzeugs installierten katalytischen Stickoxidfalle, umfassend eine Kette von perfekt gemischten Reaktoren (RPAi), die in Reihe geschaltet sind, die die katalytische Falle (NOxTRAP) modellieren, und Mittel zur Behandlung (MCL), die in das Fahrzeug eingebaut sind, die in der Lage sind, im Innern jedes Reaktors den Warmeaustausch durch Konvektion zu simulieren, indem sie die thermische Trägheit des Reaktors berücksichtigen, die außerdem in der Lage sind, den Warmeaustausch durch Konvektion mit der die katalytische Falle umgebenden Umgebungsluft zu berücksichtigen, ausgehend von der Kenntnis der Geschwindigkeit des Fahrzeugs, in dem der Motor enthalten ist, und der Temperatur der Außenluft oder der Luft unter der Motorhaube, und die in der Lage sind, fur einen kontinuierlichen Reaktor der Kette die Temperatur des Substrats der katalytischen Falle sowie die Temperatur der Gase innerhalb und am Ausgang dieses Reaktors, ausgehend von mindestens der Temperatur der Gase und dem Massenstrom der Gase stromaufwärts des Reaktors, zu berechnen.

7. Vorrichtung nach Anspruch 6, **dadurch gekennzeichnet, dass** die Anzahl der Reaktoren kleiner ist als 10, zum Beispiel großer oder gleich 3 und kleiner oder gleich 6.

8. Vorrichtung nach einem der Anspruche 6 oder 7, **dadurch gekennzeichnet, dass** die Mittel zur Behandlung außerdem in der Lage sind, den Einfluss der Druckschwankungen der Gase innerhalb des Abgassystems zu berücksichtigen.

9. Vorrichtung nach einem der Anspruche 6 bis 8, **dadurch gekennzeichnet, dass** die Mittel zur Behandlung außerdem in der Lage sind, die Exothermizität zu berücksichtigen, die auf die Umwandlungsreaktionen der gasförmigen Verbindungen auf die katalytische Phase zurückzuführen ist, ausgehend von der Kenntnis der Konzentrationen der betreffenden gasförmigen Substanzen.

10. Vorrichtung nach einem der Anspruche 6 bis 9, **dadurch gekennzeichnet, dass** die Mittel zur Behandlung in der

Lage sind, fur den kontinuierlichen Reaktor die Reaktionsenthalpien zu berechnen, die Geschwindigkeiten der chemischen Reaktionen zu schätzen, das Differentialgleichungssystem zu losen, das aus den Massen- und Wärmebilanzen für die Gase und fur das Substrat besteht, um die Temperatur der Gase am Ausgang des Reaktors zu erhalten, wobei diese Ausgangstemperatur zu einer Eingangsvariable fur den folgenden Reaktor der Kette wird.

**11.** Vorrichtung nach einem der Anspruche 6 bis 10, **dadurch gekennzeichnet, dass** sie einen eingebauten Rechner (MCL) umfasst, in dem die Mittel zur Behandlung enthalten sind.

**12.** Verwendung der Vorrichtung nach einem der Anspruche 6 bis 11, um die Speicher- und Regenerationseffizienz der Falle zu schätzen.

**13.** Verwendung der Vorrichtung nach irgendeinem der Anspruche 6 bis 11, um die Verschlechterung der Leistungen der Stickoxidreduktion und der Oxidation der Kohlenwasserstoffe und des Kohlenmonoxids zu schätzen.

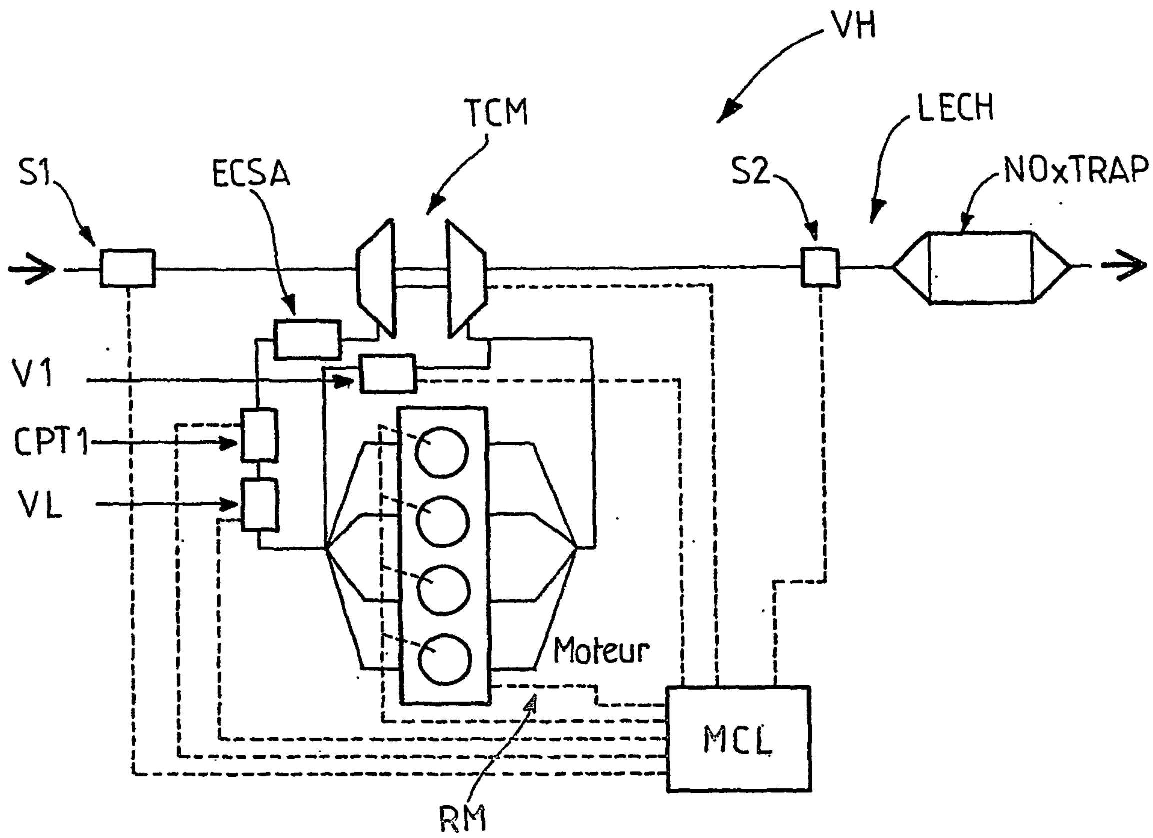
VH
TCM
LECH
S1
ECSA
S2
NOxTRAP
V1
CPT1
VL
Moteur
MCL
RM

FIG.1

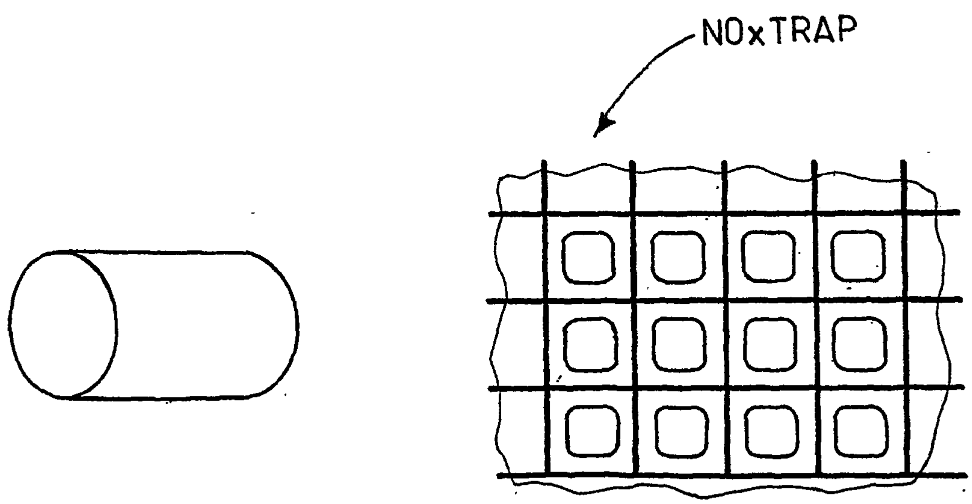
NOxTRAP

FIG.2

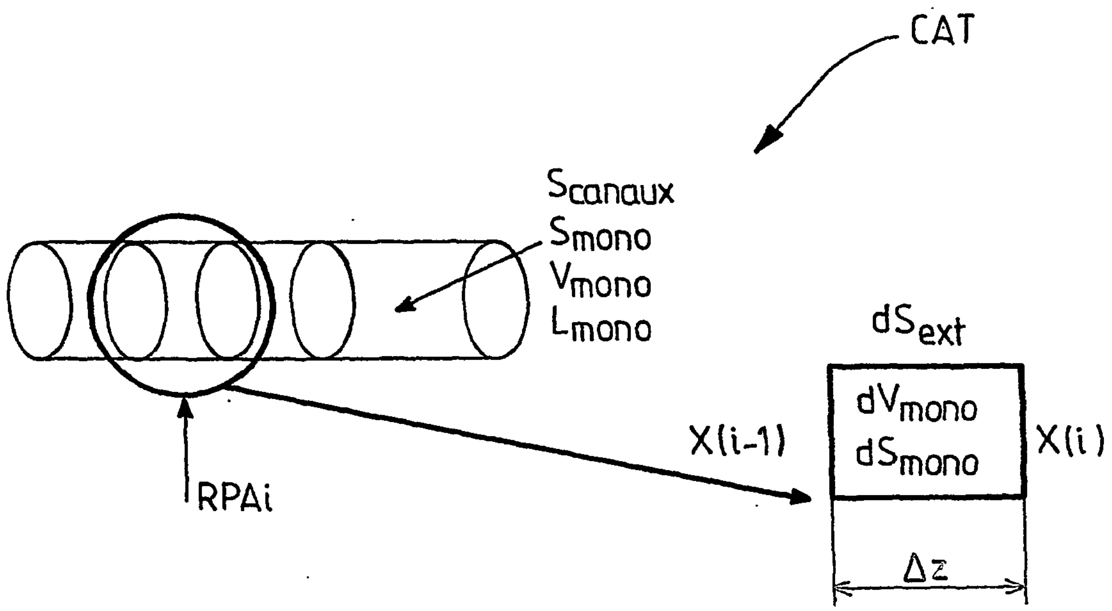
CAT
Scanaux
Smono
Vmono
Lmono
dSext
dVmono
dSmono
X(i-1)
X(i)
RPAi
Δz

FIG. 3

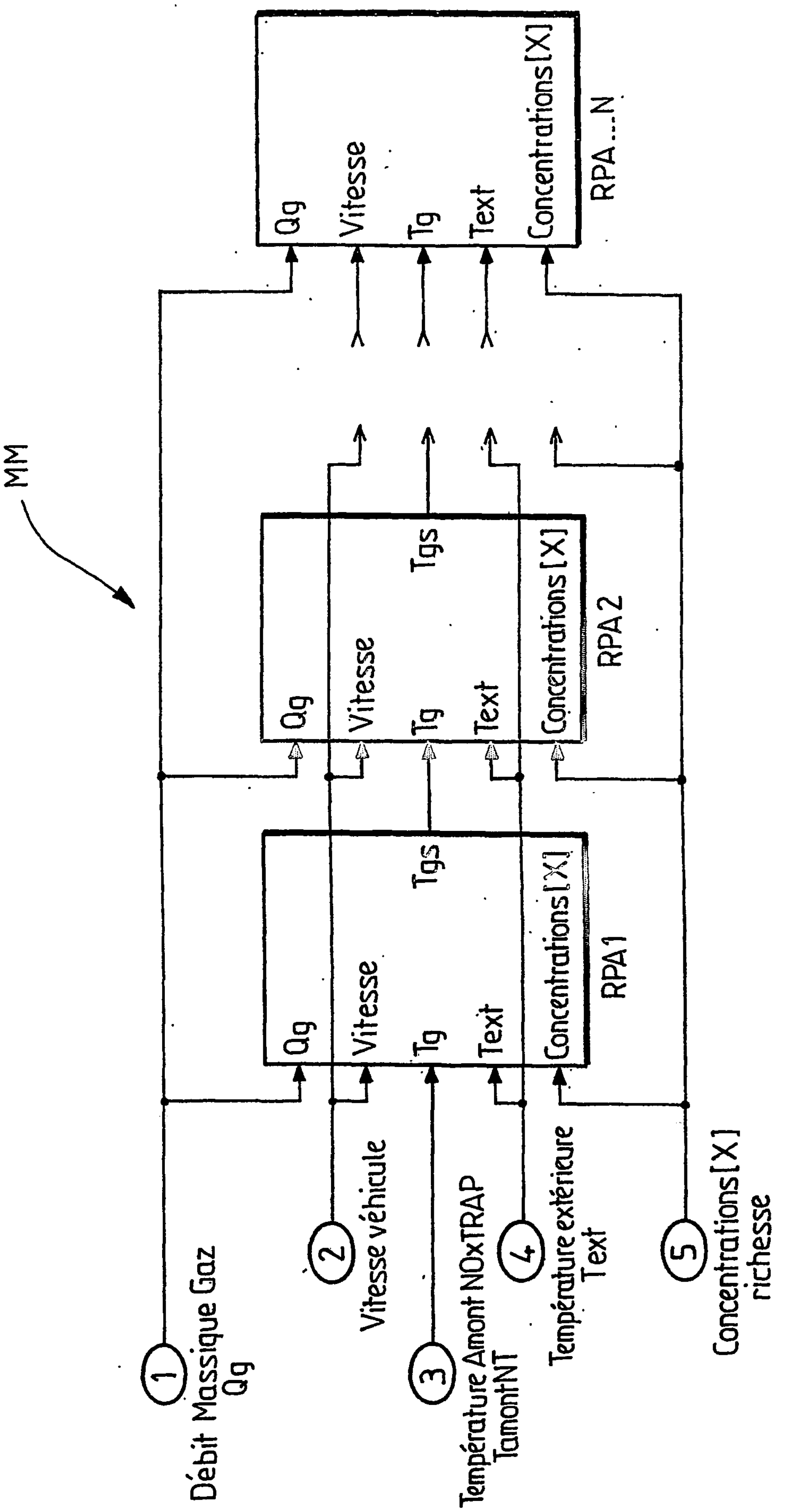
MM
RPA1
RPA 2
RPA...N
Qg
Vitesse
Tg
Text
Tgs
Concentrations [X]
1 Débit Massique Gaz Qg
2 Vitesse véhicule
3 Température Amont NOxTRAP TamontNT
4 Température extérieure Text
5 Concentrations [X] richesse

FIG. 4

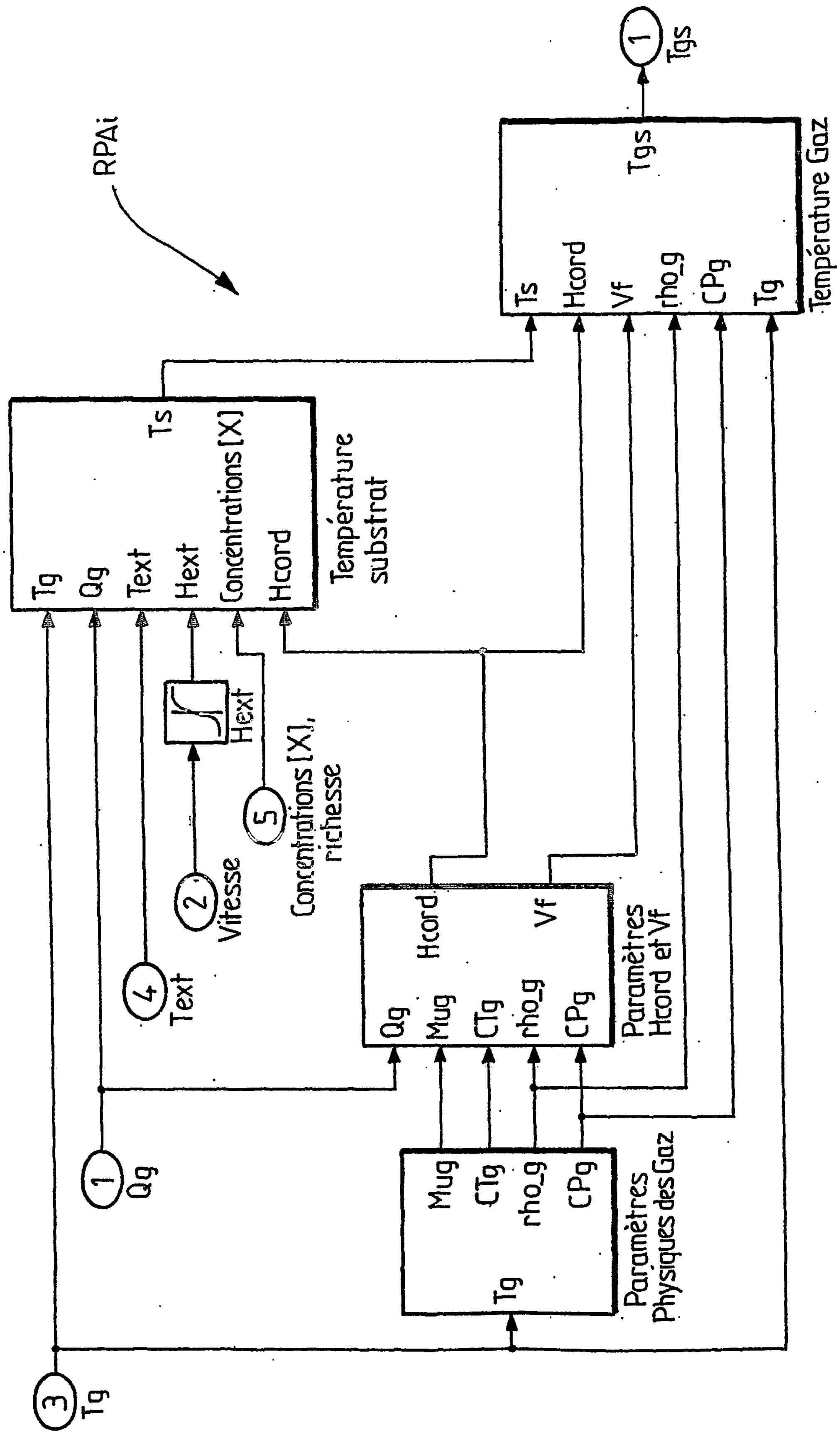
RPAi
Tg
Qg
Text
Hext
Concentrations [X]
Hcord
Ts
Température substrat
Hext
Vitesse
Concentrations [X], richesse
Qg
Mug
CTg
rho_g
CPg
Hcord
Vf
Paramètres Hcord et Vf
Tg
Mug
CTg
rho_g
CPg
Paramètres Physiques des Gaz
Ts
Hcord
Vf
rho_g
CPg
Tg
Tgs
Température Gaz
1
Tgs
2
3
4
5
1


FIG.5

| Symbole | Nom | Unité | Signification | Nature |
|---|---|---|---|---|
| [X] | [X] | | Concentrations (ou teneurs molaires) des substances contenues dans les gaz en entrée du catalyseur | variables |
| $C_{pcord}$ | CPcord | J/kg/K | chaleur spécifique apparente de la cordiérite | Table |
| $C_{pg}$ | CPg | J/kg/K | chaleur spécifique des gaz d'échappement | Table |
| $\lambda_g$ | CTg | W/m/K | conductibilité thermique des gaz d'échappement dans un élément de catalyseur | Table |
| $D_{canaux}$ | Dcanaux | 1/m² | nombre de canaux par unité de surface de monolithe | constante |
| $\Delta H_j$ | Delta_Hj | J/mole/ | enthalpie de la réaction j | Tables |
| $dL_{mono}$ | dLmono | m | élément de longueur du monolithe | constante |
| $dS_{ext}$ | dSext | m² | élément de surface d'échange extérieur | constante |
| $dS_{mono}$ | dSmono | m² | élément de surface de monolithe | constante |
| $dV_{mono}$ | dVmono | m³ | élément de volume de monolithe | constante |
| Eaj | Eaj | J/mole | Energie d'activation liée à la réaction j | constante |
| $e_{pcord}$ | epcord | m | épaisseur des parois de cordiérite | constante |
| $\varepsilon_v$ | Epsv | | fraction de vide | constante |
| $h_{cord}$ | Hcord | J/m²/K/s | coefficient de transfert gaz / solide | variable |
| $h_{ext}$ | Hext | J/s/K/m² | coefficient d'échange extérieur | Table |
| $L_{canal}$ | Lcanal | m | longueur du côté d'un canal | constante |
| $L_{mono}$ | Lmono | m | longueur du monolithe | constante |
| Mgaz | Mgaz | g | Masse molaire des gaz d'échappement | constante |
| $\mu_g$ | Mug | kg/m/s | viscosité dynamique des gaz d'échappement dans un élément de catalyseur | Table |
| $N_{éléments_catalyseur}$ | Nr | | nombre d'éléments de discrétisation spatiale | constante |
| $P_r$ | Pr | | nombre de Prandtl | variable |
| $P_{tot}$ | Ptot | Pa | pression totale des gaz d'échappement | variable |
| Qg | Qg | g/s | | |
| $R_e$ | Re | | nombre de Reynolds | variable |
| $R_{gp}$ | Rgp | | Constante des gaz parfaits | constante |
| $\rho_{cord}$ | rho_cord | kg/m³ | masse volumique apparente de la cordiérite | constante |
| $\rho_g$ | rho_g | kg/m³ | masse volumique des gaz d'échappement dans un élément de catalyseur | Table |
| $\rho_{mono}$ | rho_mono | kg/m³ | masse volumique apparente du monolithe | constante |
| $r_j$ | rj | mole/m³/s | vitesse de la réaction chimique j | variable |
| $S_{mono}$ | Smono | cm² | surface de la section du monolithe | constante |
| TamontNT | TamontNT | K | Température des gaz en amont du catalyseur | variable |
| $T_{ext}$ | Text | K | Température extérieure | variable |
| Tg | Tg_celsius | ° Celsius | Température des gaz | variable |
| Ts | Ts | Kelvin | Température du substrat | variable |
| $V_f$ | Vf | m/s | vitesse linéaire des gaz dans le catalyseur | variable |
| Vitesse | vitesse | km/h | Vitesse du véhicule | variable |
| $V_{mono}$ | Vmono | l | volume du monolithe | constante |

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- DE 10036942 A1